# NEW EUROPEAN PATENT SPECIFICATION

(11) **EP 3 121 442 B2**
(45) Date of publication and mention of the opposition decision: **05.07.2023**
(45) Mention of the grant of the patent: 14.03.2018
(21) Application number: 15382372.9
(22) Date of filing: 20.07.2015
(51) Int. Cl.: F03D 7/04

(54) **OPERATING WIND TURBINES**
BETRIEB VON WINDTURBINEN
FONCTIONNEMENT DE TURBINES ÉOLIENNES

(43) Date of publication of application: 25.01.2017
(73) Proprietor: GE Renewable Technologies Wind B.V., 4817 PA Breda (NL)
(72) Inventor: ROMA, Sergi, 08570 TORELLÓ (ES)
(74) Representative: de Rooij, Mathieu Julien

(56) References cited:
- EP-A1- 2 644 889
- EP-A2- 2 767 710
- WO-A1-2015/039665
- US-A1- 2009 099 702
- US-A1- 2013 166 082
- US-B2- 7 357 622

## Description

The present disclosure relates to methods of operating a first wind turbine and a second wind turbine in a situation wherein presence of the first wind turbine affects the wind so that a wake is generated that affects the second wind turbine. The present disclosure further relates to control systems for operating a plurality of wind turbines, and to wind farms including any of such control systems.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of a rotor shaft drives a generator rotor either directly ("directly driven") or through the use of a gearbox. The gearbox (if present), the generator and other systems are usually mounted in a nacelle on top of a wind turbine tower.

Wind turbines are often grouped together in so-called wind farms. In the present disclosure, a wind farm is to be regarded as a cluster of two or more wind turbines. In a wind farm there may be a relatively short distance between wind turbines. Thus, action of the wind on one wind turbine may produce a wake which may be received by another wind turbine. A wake received by a wind turbine may cause loads (particularly vibrations) and/or a reduction of electrical power production in this wind turbine. These loads may damage components of the wind turbine, and this damage may reduce the life and/or the performance of the wind turbine. Therefore, in a wind farm, monitoring is carried out in order to determine possible wake situations and the wind turbines are operated in order to minimize negative effects caused by the wakes.

Currently, it is known that some wake management strategies are defined by simulating operational conditions (e.g. loads, generated power, etc.) for a theoretical layout and parameters of the wind. For every wind turbine in the layout, a set of adjustments in the operation of the wind turbine (e.g. stops, curtailments) is defined for predetermined wind directions in order to perform an operation of the wind turbine as optimal as possible. Optimal operation may be in terms of e.g. producing maximum power, minimizing loads, etc. depending on the main goal pursued at each moment. These adjustments are entered in a control system (e.g. a SCADA control system) which applies them in the wind farm by e.g. sending suitable control signals to e.g. the corresponding pitch systems, brakes, etc.

An optimizing algorithm may be used to improve the performance of at least part of the wind farm based on the interaction between wind turbines. Wake effects may be detected and evaluated by using one or more theoretical wake models including empirical factors (parameters, constants, etc.) which are predefined based on previous experience at existing wind farms (e.g. from operational data collected from before installation of the wind farm). This way of computing wakes may produce results that greatly diverge from what is actually happening between wind turbines due to variations of characteristics of the environment. For instance, the air density may vary, the geography may change due to e.g. trees growing and/or constructions erected in the vicinity of the wind turbines, etc. Furthermore, the models themselves, which are based on existing wind farms, may not be appropriate for the wind farm under consideration as particular conditions of the existing wind farms may not be applicable. This divergence may cause deficient operation of the wind turbines and the wind farm as a whole.

It is an object of the present disclosure to provide methods and systems for operating wind turbines that at least partially reduce at least one of the aforementioned drawbacks, leading to improved performance of the wind turbines as a whole.

### SUMMARY

The invention provides methods of operating a first wind turbine and a second wind turbine in a situation wherein presence of the first wind turbine affects the wind so that a wake is generated that affects the second wind turbine in accordance with any of independent claims 1, 4 and 6. Embodiments are set out in the dependent claims.

The methods comprise determining one or more parameters of the wind at the first wind turbine, and determining one or more parameters of the wind at the second wind turbine.

The methods further comprise determining a value of a parameter of a theoretical wake model to determine a current wake model. This value is determined based on the one or more parameters of the wind at the first wind turbine, and on the one or more parameters of the wind at the second wind turbine. The method still further comprises optimizing the operation of the first and second wind turbines based on the current wake model.

In some examples, the method may further comprise determining a divergence between a previously determined wake model and the current wake model, and verifying whether said divergence exceeds a predefined threshold. In case of negative result of said verification, the previously determined wake model may be taken as the current wake model.

The previously determined wake model may be either a wake model determined in a previous execution (or iteration) of the method (i.e. based on real parameters of the wind at the first and second wind turbines) or a baseline wake model. For example, the previously determined wake model may be the wake model that has been determined most recently in a preceding execution (or iteration) of the method.

The baseline wake model may refer to a wake model that has been predetermined based on data other than real parameters of the wind (at the first and second wind turbines) because e.g. no execution of the method has still been performed. The baseline wake model may have been determined based on e.g. data from other wind farms. Once a first execution (or iteration) of the method has been performed, the baseline wake model may not be used anymore. In this case, a wake model determined in a previous iteration or execution of the method may be used instead of the baseline wake model.

Determining parameters of the wind at first and second wind turbines may comprise determining wind speed and/or wind turbulence and/or wind direction at first and second wind turbines. Other parameters are also possible.

Obtained wind speeds may be used to calculate a value of wind speed deficit, which may be compared to a wind speed deficit obtained from a wake model such as e.g. Jensen model. Similarly, obtained wind turbulences may be used to calculate a value of added wind turbulence, which may be compared to an added turbulence obtained from a wake model such as e.g. Frandsen model.

The current wake model may be determined from a theoretical wake model based on real operational data (parameters of the wind) determined at first and second wind turbines participating in the wake. Said real operational data may comprise e.g. wind speed at first and second wind turbines, from which a real speed deficit may be calculated. A theoretical wake model may comprise an analytical function expressing the speed deficit depending on a factor (or constant). Determining the current wake model may comprise calculating a value for said factor/constant that makes the analytical function (of the theoretical wake model) to produce a speed deficit substantially equal to the "measured" real speed deficit. Hence, the current wake model may be seen as a particular version of the theoretical wake model including the recalculated factor/constant. Which parameter or property of the wind is to be taken into account depends on the theoretical model used for describing wake behaviour.

For example, Jensen model comprises an analytical function mathematically expressing the speed deficit depending on variables, such as e.g. rotor diameter and thrust coefficient, and on a predefined decay constant. A new value for the decay constant of the Jensen model may be calculated that produces the real speed deficit calculated from the real wind speeds measured at first and second wind turbines. Other theoretical wake models may comprise other analytical functions including other empirical factors or constants that may also be recalculated based on real parameters of the wind. For instance, Frandsen turbulence model comprises an analytical function mathematically expressing added wind turbulence. Other wake models that can be used in the context of the suggested method are e.g. Larsen model and Ainslie model.

These theoretical wake models (Jensen, Frandsen, Larsen, Ainslie, etc.) are well known in the technical field of the present disclosure, so no many further details will be provided herein about them.

The proposed method of operating first and second wind turbines is based on determining a current wake model depending on real parameters of the wind measured at first and second wind turbines. Then, the current wake model may be inputted in an optimization process to optimize the operation of the wind turbines. An aspect of the method may thus be that wind turbines are operated more optimally because wake is modelled depending on real operational data (parameters of the wind) rather than on predefined data. In some examples, determining a current wake model describing the behaviour of a wake in a certain wind farm may be done in real-time.

According to independent claim 4, the parameters of the wind at the first and second wind turbines are determined depending on one or more measurements from a LIDAR associated with the wind turbines. The LIDAR may be arranged in the vicinity of the wind turbines in e.g. a frontal position, such that parameters of the wind received by the wind turbines may be reliably measured.

At least some of the parameters of the wind at any of the first and second wind turbines may also be determined depending on one or more operational characteristics of the wind turbine. These operational characteristics may comprise at least one of: pitch angle, yaw angle, rotor speed, rotor torque and generated power. Wind turbines may comprise sensors configured to obtain measures that permit determining such operational characteristics when required.

In accordance with independent claim 6, the parameters of the wind at any of the first and second wind turbines are determined depending on one or more loads measured at the wind turbine. Wind turbines may comprise load sensors through which said load measurements are obtained.

A particular wind parameter may be determined through any one of the previously described manners or through a combination thereof. In this latter case, the different values obtained for the wind parameter may be averaged such that a more reliable value of the parameter is obtained. The different values of the parameter may be suitably weighted in said averaging depending on an estimated reliability of the algorithm used to determine every value of the wind parameter.

According to examples, the first and second wind turbines may be operated by controlling one or more operational parameters of the wind turbine. Optimum values of the operational parameters (to be controlled) may be obtained either from one or more matrices (or lookup tables), or from one or more functions, or from a combination of both. Optimum values of the operational parameters may be those that maximize parameters of an optimization objective depending on parameters of the current wake model. For example, optimum values of the operational parameters may be those that maximize e.g. the generation of power or the reduction of loads depending on the current wake model.

In some examples, methods of operating a plurality of wind turbines may be provided. These methods may comprise detecting one or more pairs of the wind turbines having a first wind turbine and a second wind turbine in a situation wherein presence of the first wind turbine affects the wind so that a wake is generated that affects the second wind turbine. These methods may further comprise operating, for at least some of the detected pairs of wind turbines, the first and second wind turbines of the pair of wind turbines by performing any of the methods of operating first and second wind turbines according to claim 1, 4 or 6. At least one of the pairs of wind turbines may be detected depending on a previously determined wake model for the first and second wind turbines of the pair of wind turbines, so that said detection may be based on more real data and therefore may be more reliable. The previously determined wake model may be the wake model determined in the most recent execution (or iteration) of the method.

In a second aspect, control systems are provided for operating a plurality of wind turbines which e.g. may be comprised in a wind farm. These control systems comprise a processor and a memory. The memory stores computer executable instructions that, when executed, cause the processor to perform methods of operating a plurality of wind turbines according to claim 9.

In a third aspect, wind farms are provided comprising a plurality of wind turbines and any one of the previously described control systems.

### BRIEF DESCRIPTION OF THE DRAWINGS

Non-limiting examples of the present disclosure will be described in the following, with reference to the appended drawings, in which:
Figure 1a is a schematic representation of an example of a wind farm.
Figure 2a is a schematic representation of a wake situation between first and second wind turbines wherein wind speed deficit is caused on second wind turbine.
Figure 2b is a schematic representation of a wake situation between first and second wind turbines wherein added wind turbulence is caused on second wind turbine.
Figure 3 is a flow chart of an example of a method of operating a plurality of wind turbines.

### DETAILED DESCRIPTION OF EXAMPLES

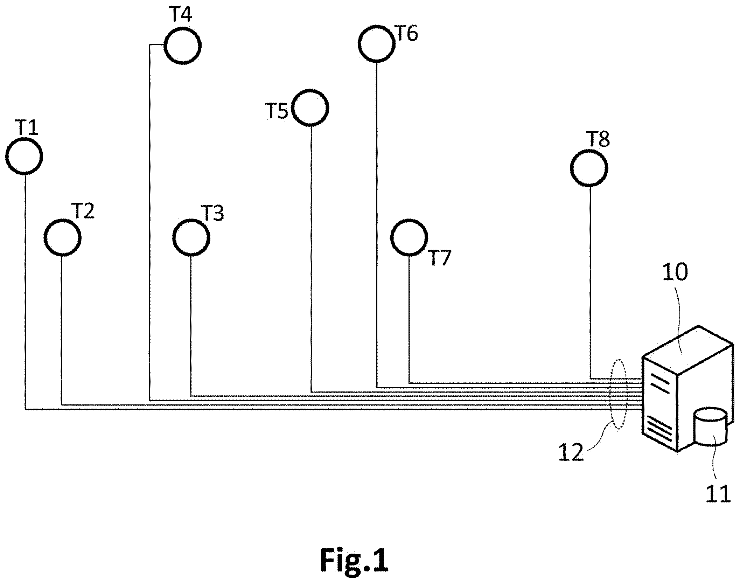

Figure 1 is a schematic representation of a wind farm according to an example. This wind farm may comprise a plurality of wind turbines T1 - T8, which are conceptually represented in the figure as circles. Each or some of these wind turbines may have different types of sensors (not shown) such as e.g. load sensors, LIDARs, yaw sensors, etc. The wind farm may also comprise an example of a control system 10 for operating all or part of the wind turbines T1 - T8 as a whole. The wind turbines T1 - T8 may be theoretically distributed within the wind farm according to a theoretical layout. In some examples, a met pole may be included in the wind park for measuring wind and ambient conditions (e.g. temperature, wind direction, turbulence, wind speed, humidity etc.).

The control system 10 may be connected 12 with the wind turbines T1 - T8, such that the control system 10 may receive measurements (e.g. load measurements, wind measurements, yaw measurements, etc.) from sensors associated with some or all of the wind turbines T1 - T8. The control system 10 may also send, through the connection 12, proper signals (e.g. set points) to the wind turbines T1 - T8 for adjusting their operation as a whole. The control system 10 may comprise a memory and a processor. The memory may store computer program instructions executable by the processor. Said instructions may comprise functionality to execute one or more examples of a method of operating a plurality of wind turbines, which are described in other parts of the description. The control system 10 may further comprise a repository 11 for obtaining and storing data related to wind turbines T1 - T8, such as e.g. the layout of the wind farm, distances between wind turbines, dimensions of the wind turbines, theoretical wake models, control strategies, etc.

Each or some of the wind turbines T1 - T8 may have an individual controller configured to operate the wind turbine depending on individual parameters and control signals (set points) received from the control system 10. These individual controllers may control operational parameters (pitch angle, rotor speed, rotor torque, etc.) of the wind turbine in such a way that set points from the control system 10 and individual requirements are satisfied.

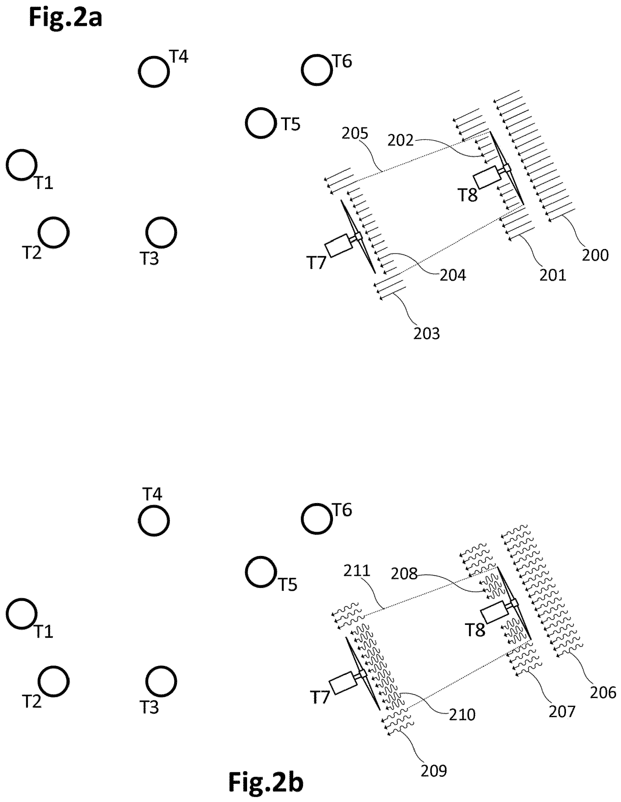

Figure 2a is a schematic representation of a wind farm similar to the one of Figure 1, wherein a wake situation/scenario is illustrated between first and second wind turbines resulting in a wind speed deficit. In this figure, it is shown that presence of the wind turbine T8 may affect the wind 200 so that a wake 205 is generated that affects the wind turbine T7. Thus, wind passing through the rotor of the wind turbine T8 is shown suffering a reduction of its speed 202. Wind passing surrounding the rotor of wind turbine T8 is shown maintaining its wind speed substantially unchanged 201, but this is not necessarily the case.

The wind with substantially unchanged speed 203 is shown passing surrounding the rotor of wind turbine T7. The wind with reduced speed 204 is shown influencing the rotor of the wind turbine T7, such that e.g. less power is generated by the wind turbine T7. An excessively reduced wind speed 204 may cause the stop of the wind turbine T7. An objective of an example of a method of operating first and second wind turbines T7, T8 may be maximizing power generation by the wind turbines T7, T8 as a whole, and this may be achieved by e.g. avoiding the stop of the wind turbines T7, T8. Taking this aim into account, said method may suitably vary the operation of the wind turbine T8 in such a way that the wind speed 204 is less reduced so that the stop of the wind turbine T7 is avoided. Turbines T7, T8 may thus be operated by the proposed method in such a way that their performance is improved as a whole.

Jensen model is an example of theoretical wake model which describes the wind speed deficit schematically illustrated by Figure 2a.

Figure 2b is a schematic representation of a wind farm similar to the one of Figure 1, wherein a turbulence increase (added turbulence) is illustrated between first and second wind turbines as a result of the wake effect. It is shown that the presence of the wind turbine T8 may affect the wind 206 so that a wake 211 is generated that affects the wind turbine T7. The wind 206 is represented with a certain level of turbulence through slightly wavy arrows. Wind passing through the rotor of the wind turbine T8 is shown with an increased turbulence 208. Wind passing surrounding the rotor of the wind turbine T8 is shown maintaining its level of turbulence substantially unchanged 207, but this is not necessarily the case.

The wind without added turbulence 209 is shown passing surrounding the rotor of the wind turbine T7. The wind with added turbulence 210 is shown influencing the rotor of the wind turbine T7, such that e.g. higher loads are suffered by the wind turbine T7. Excessively increased wind turbulence 210 may cause too high loads on the wind turbine T7 and its individual operation may be varied accordingly with the aim of reducing such loads. This variation of the individual operation may cause a reduction of power generation or even the stop of the wind turbine T7. An objective of an example of a method of operating first and second wind turbines T7, T8 may be maximizing power generation by the wind turbines T7, T8 as a whole. This objective may be achieved by avoiding the reduction of power generation by wind turbine T7 and/or the stop of the wind turbine T7. Taking this goal into account, said method may cause operation of the wind turbine T8 in such a way that e.g. the added turbulence 208 and its affectation on the wind turbine T7 are attenuated. Turbines T7, T8 may thus be operated by the proposed method in such a way that their performance is improved as a whole. Alternatively, an objective of an example of a method of operating first and second wind turbines T7, T8 may be limiting loads suffered by T7.

Frandsen model is an example of theoretical wake model which models the effect of added turbulence schematically illustrated by Figure 2b.

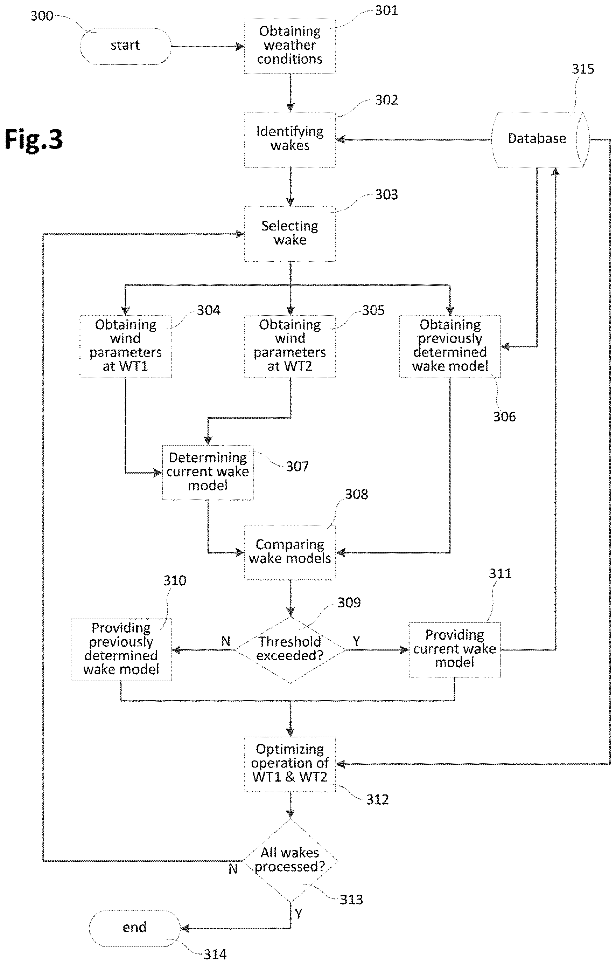

Figure 3 is a flow chart of an example of a method of operating a wind farm according to an implementation. The method may be initiated at initial block 300 which may be triggered upon reception of a user request, as a result of an automatic triggering, upon detection of a triggering condition, etc.

At block 301, parameters representative of weather conditions at the wind farm site may be obtained from a reference mast or similar arranged at wind farm level. Parameters of the wind (speed and direction) may be systematically measured and obtained, whereas other parameters (wind turbulence, temperature or density) might optionally also be acquired.

These data may be stored in a Database (DB) 315 for later use, such as e.g. for empirical analysis of wind farm data. If just a short time has elapsed since the last execution of block 301, recent data on parameters of the wind and possibly other aspects may be obtained from DB 315 instead of from the reference mast.

At block 302, wake situations in the wind farm may be identified from the ambient data obtained at block 301 and one or more surrogate models associated with the wind farm from DB 315. Situations in that wind conditions (i.e. wind speed and wind direction) are such that a first wind turbine causes a wake affecting a second wind turbine may be detected by processing data from block 301 and data from DB 315. Surrogate model may include geometrical data, i.e. layout of the wind farm including distribution of wind turbines, distances between wind turbines, dimensions of wind turbines, etc. Surrogate model may further comprise wake model(s) that can be used to model and estimate presence and relevance of wake situations substantially in real time.

As commented in other parts of the description, a theoretical wake model may include parameters characterizing e.g. wind turbines and their distribution, and empirical factors theoretically conditioning the occurrence and magnitude of wakes. Said empirical factors may be predefined based on previous experience (empirical data) from known wind farms, thus resulting in a baseline wake model. Block 302 may produce a set of pairs of wind turbines with a wake between them which may distort the operation and power generation of the wind farm as a whole.

Alternatively to using the baseline wake model, a wake model determined in a previous execution of the method may be retrieved from DB 315 and used instead of the baseline wake model for identifying wake situations. A previous execution (or iteration) of the proposed method may have produced a wake model from current real wind data determined at first and second wind turbines and may have stored said previously determined wake model in DB 315 for later use. The wake model retrieved from DB 315 may be the one generated most recently for the first and second wind turbines that are being processed. In that sense, note that different areas of a wind farm may have varying characteristics, so different wake models may be applicable to each of those differentiated areas.

At block 303, one of the pairs of wind turbines detected at previous block 302 may be selected to be processed in subsequent blocks.

At block 304, one or more wind parameters may be determined at first wind turbine which is creating the wake. At block 305, one or more wind parameters may be determined at second wind turbine which is receiving the wake. In both blocks 304, 305, the one or more wind parameters may comprise one of the wind speed, wind turbulence and wind direction.

According to claim 4, wind speed and/or wind turbulence at a wind turbine are determined depending on measurements from a LIDAR associated with the first and second wind turbines. Individual controller of a wind turbine may operate the wind turbine by controlling operational parameters such as e.g. pitch angle, yaw angle, rotor speed, torque and generated power based on measurements obtained at the wind turbine. In methods not covered by claim 4, wind speed and/or wind turbulence may be indirectly determined at a wind turbine from at least some of said operational parameters controlled by the individual controller of the wind turbine. A wind turbine may also comprise load sensors for determining loads on the wind turbine. In methods according to claim 6, wind speed and/or wind turbulence are indirectly determined at a wind turbine from load measurements provided by said load sensors.

At block 306, a previously determined wake model having a parameter with a predetermined value for the first and second wind turbines may be retrieved from DB 315. The previously determined wake model may be either a baseline wake model or a wake model determined in a previous execution or iteration of the method.

At block 307, a current wake model may be determined by calculating a value of the parameter of the theoretical wake model based on the obtained wind parameter(s) at first and second wind turbines.

Based on the real wind parameter(s) determined at first and second wind turbines, a real (experimental) magnitude may be obtained. In most cases, this real magnitude may refer to wind speed deficit on the second wind turbine. As commented with respect to Figure 2a, wind speed deficit is obtainable from the Jensen wake model. In other cases, the obtained real magnitude may refer to added wind turbulence on the second wind turbine, i.e. an amount of added turbulence received by the downwind (second) wind turbine from the upwind (first) wind turbine. As commented with respect to Figure 2b, added wind turbulence may be determined by using the Frandsen wake model.

A value of a constant or factor of the theoretical wake model may be calculated. Said calculation of the constant or factor may be performed based on the real (experimental) magnitude obtained from the real wind parameter(s) determined at first and second wind turbines. In the case of methods not covered by claim 1 using the Jensen model, the constant to be calculated may be the "decay constant" which depends on predefined data (roughness of the ground surface and height of the wind turbine tower) in the analytical function of the model. The Jensen model may thus be used in methods not covered by claim 1 to calculate the decay constant in such a way that the analytical function produces a wind speed deficit substantially equal to the obtained real magnitude of the wind speed deficit (depending on real wind speed at first and second wind turbines). This calculated decay constant may be used in subsequent calculations of the proposed method, such as e.g. those aimed at optimizing the operation of first and second wind turbines.

At block 308, the previously determined wake model (obtained from DB 315) and the current wake model (determined from current real wind data) may be compared.

At block 309, a verification of whether the comparison performed at block 308 produces a divergence that exceeds a predefined threshold may be performed. In case of positive result of said verification, the method may continue to block 311 at which the current wake model (determined from current real wind data) is provided to block 312 of optimizing the operation of first and second wind turbines. In case of negative result of said verification, the method may continue to block 310 at which the previously determined wake model is taken as the current wake model and therefore provided to block 312 of optimizing the operation of first and second wind turbines.

At block 311, the current wake model (determined from current real wind data) may be also provided to DB 315 for its storage, so that later executions or iterations of the method may re-use said wake model at block 306. An aspect of this re-utilization of wake models determined in previous executions or iterations of the method is that wakes may be estimated based on more real conditions.

In the case that the previously determined wake model and the current wake model (obtained from current real wind data) slightly differ from each other, the previously determined wake model may be taken as the current wake model and therefore used in subsequent calculations. Since the previously determined wake model has been already used (in previous executions of the method) its selection for subsequent calculations may require relatively less computational effort.

At block 312, operation of first and second wind turbines may be optimized taking into account the current wake model, which may have been obtained from current real wind data (at first and second wind turbines) or may be the previously determined wake model, depending on the result of the verification performed at block 309. Optimum operating parameters, such as e.g. pitch, torque, rpms, yaw, etc. may be generated for both first and second wind turbines depending on the current wake model. Said optimization may be performed depending on an objective, such as e.g. maximizing power generation, maximizing loads reduction, etc. This optimization may be performed by using matrices or look-up tables having input and output parameters. Input parameters may comprise those parameters characterizing the current operational state of wind turbines, the operational objective to be achieved, etc. Output parameters may comprise those operating parameters (pitch, torque, rpms, etc.) to be controlled for operating the wind turbine.

In the case of methods not covered by claim 1 and using the Jensen wake model, the decay constant of the current wake model may be one of the input parameters such that output parameters may be determined depending on said decay constant.

Any known optimizing algorithm may be used to select the most optimum output parameters according to the objective to be achieved which is represented in the matrices (or look up tables) in the form of input parameters.

Alternatively to using matrices with input and output parameters, suitable analytical function(s) may be used for optimizing the operation of first and second wind turbines. In this sense, output parameters to be controlled (for operating the wind turbine) may be expressed as a function of input parameters such as e.g. factor or constant of the corresponding wake model. For example, in the case of methods not covered by claim 1 using Jensen model, an output parameter (pitch, rpms, torque...) may be expressed as a function of the decay constant and other parameters such as e.g. variables characterizing the objective to be achieved (maximum power, maximum loads reduction, ...). Any known optimizing algorithm may be used to optimize such analytical functions.

Once optimum operating parameters have been obtained, corresponding control signals (or set points) may be sent to wind turbine actuators to operate the first and second wind turbines according to the obtained optimum operating parameters.

At block 313, a verification of whether all the pairs of wind turbines detected at block 302 have been processed (at blocks 303 - 312) may be performed. In case of negative result of said verification, the method may loop back to block 303 in order to select a next pair of wind turbines to be processed. In case of positive result of said verification, the method may continue to final block 314.

At block 314, the method may end its execution. From this point, the initial block 300 may be triggered again in order to perform a new iteration or execution of the method, such that the method may continuously iterate under a given frequency, for example.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of operating a first wind turbine and a second wind turbine in a situation wherein presence of the first wind turbine affects the wind so that a wake is generated that affects the second wind turbine, the method comprising:
determining one or more parameters of the wind at the first wind turbine;
determining one or more parameters of the wind at the second wind turbine;
based on the one or more parameters of the wind at the first wind turbine, and on the one or more parameters of the wind at the second wind turbine, determining a value of a parameter of a theoretical wake model to determine a current wake model, wherein the theoretical wake model is either a Frandsen model or a Larsen model; and
optimizing the operation of the first and second wind turbines based on the current wake model.

2. A method of operating a first and a second wind turbine according to claim 1, wherein determining the one or more parameters of the wind at the first wind turbine comprises determining first wind speed at the first wind turbine;
wherein determining the one or more parameters of the wind at the second wind turbine comprises determining second wind speed at the second wind turbine; and wherein
the value of the parameter of the theoretical wake model is determined depending on the first and second wind speeds denoting a wind speed deficit caused by the wake on the second wind turbine.

3. A method of operating a first and a second wind turbine according to any of claims 1, wherein the theoretical wake model is the Frandsen model and wherein
determining the one or more parameters of the wind at the first wind turbine comprises determining first wind turbulence at the first wind turbine; wherein
determining the one or more parameters of the wind at the second wind turbine comprises determining second wind turbulence at the second wind turbine; and wherein
the value of the parameter of the theoretical wake model is determined depending on the first and second wind turbulences denoting an added wind turbulence caused by the wake on the second wind turbine.

4. A method of operating a first wind turbine and a second wind turbine in a situation wherein presence of the first wind turbine affects the wind so that a wake is generated that affects the second wind turbine, the method comprising:
determining one or more parameters of the wind at the first wind turbine;
determining one or more parameters of the wind at the second wind turbine;
based on the one or more parameters of the wind at the first wind turbine, and on the one or more parameters of the wind at the second wind turbine, determining a value of a parameter of a theoretical wake model to determine a current wake model; and
optimizing the operation of the first and second wind turbines based on the current wake model, wherein the one or more parameters of the wind at the first wind turbine are determined based on one or more measurements from a LIDAR associated with the first wind turbine, and the one or more parameters of the wind at the second wind turbine are determined based on one or more measurements from a LIDAR associated with the second wind turbine.

5. A method of operating a first and a second wind turbine according to any of claims 1 to 4, wherein the one or more parameters of the wind at the first wind turbine are determined based on one or more operational characteristics of the first wind turbine, and/or the one or more parameters of the wind at the second wind turbine are determined based on one or more operational characteristics of the second wind turbine; wherein
said one or more operational characteristics comprise at least one of: pitch angle, yaw angle, rotor speed, rotor torque and generated power.

6. A method of operating a first wind turbine and a second wind turbine in a situation wherein presence of the first wind turbine affects the wind so that a wake is generated that affects the second wind turbine, the method comprising:
determining one or more parameters of the wind at the first wind turbine;
determining one or more parameters of the wind at the second wind turbine;
based on the one or more parameters of the wind at the first wind turbine, and on the one or more parameters of the wind at the second wind turbine, determining a value of a parameter of a theoretical wake model to determine a current wake model; and
optimizing the operation of the first and second wind turbines based on the current wake model, wherein
the one or more parameters of the wind at the first wind turbine are determined based on one or more loads measured at the first wind turbine, and/or the one or more parameters of the wind at the second wind turbine are determined based on one or more loads measured at the second wind turbine, wherein either
determining the one or more parameters of the wind at the first wind turbine comprises determining first wind speed at the first wind turbine; and determining the one or more parameters of the wind at the second wind turbine comprises determining second wind speed at the second wind turbine; and the value of the parameter of the theoretical wake model is determined depending on the first and second wind speeds denoting a wind speed deficit caused by the wake on the second wind turbine, or wherein
determining the one or more parameters of the wind at the first wind turbine comprises determining first wind turbulence at the first wind turbine; and determining the one or more parameters of the wind at the second wind turbine comprises determining second wind turbulence at the second wind turbine; and the value of the parameter of the theoretical wake model is determined depending on the first and second wind turbulences denoting an added wind turbulence caused by the wake on the second wind turbine.

7. A method of operating a first and a second wind turbine according to any of claims 1 to 6, further comprising
determining a divergence between a previously determined wake model and the current wake model;
verifying whether said divergence exceeds a predefined threshold; and in case of negative result of said verification, taking the previously determined wake model as the current wake model.

8. A method of operating a first and a second wind turbine according to any of claims 1 to 7, wherein the previously determined wake model is a wake model determined in a previous execution of the method of operating the first and second wind turbines.

9. A method of operating a first and a second wind turbine according to any of claims 1 to 8, wherein
the first and second wind turbines are operated by controlling one or more operational parameters of the wind turbine; and wherein optimizing the operation of the first and second wind turbines comprises
obtaining optimum values of the operational parameters from one or more matrices or lookup tables that define possible values of the operational parameters depending on at least possible values of one or more parameters of an optimization objective and possible values of one or more parameters of the current wake model; wherein
said optimum values of the operational parameters are those that maximize the parameters of the optimization objective depending on the parameters of the current wake model.

10. A method of operating a first and a second wind turbine according to any of claims 1 to 8, wherein
the first and second wind turbines are operated by controlling one or more operational parameters of the wind turbine; and wherein
optimizing the operation of the first and second wind turbines comprises obtaining optimum values of the operational parameters from one or more functions that define the operational parameters depending on at least one or more parameters of an optimization objective and one or more parameters of the current wake model; wherein
said optimum values of the operational parameters are those that maximize the parameters of the optimization objective depending on the parameters of the current wake model.

11. A method of operating a plurality of wind turbines, the method comprising
detecting one or more pairs of the wind turbines having a first wind turbine and a second wind turbine in a situation wherein presence of the first wind turbine affects the wind so that a wake is generated that affects the second wind turbine;
operating, for at least some of the detected pairs of wind turbines, the first and second wind turbines of the pair of wind turbines by performing a method of operating first and second wind turbines according to any of claims 1 to 10.

12. A method of operating a plurality of wind turbines according to claim 11, wherein at least one of the pairs of wind turbines is detected using a previously determined wake model.

13. A control system for operating a plurality of wind turbines, comprising a processor and a memory; wherein
the memory stores computer executable instructions that, when executed, cause the processor to perform a method of operating a plurality of wind turbines according to any of claims 11 to 12.

14. A wind farm comprising a plurality of wind turbines and a control system according to claim 13.

## Patentansprüche

1. Ein Verfahren zum Betrieb von einer ersten Windturbine und einer zweiten Windturbine in einer Situation, bei der die Anwesenheit der ersten Windturbine auf den Wind derart wirkt, dass eine Nachlaufströmung erzeugt wird, welche auf die zweite Windturbine wirkt, wobei das Verfahren folgendes umfasst:
feststellen von einem oder mehreren Windparametern an der ersten Windturbine;
feststellen von einem oder mehreren Windparametern an der zweiten Windturbine;
beruhend auf dem einen oder mehreren Windparametern an der ersten Windturbine, und auf dem einen oder mehreren Windparametern an der zweiten Windturbine, feststellen von einem Wert eines Parameters eines theoretischen Nachlaufströmungsmodells, um ein aktuelles Nachlaufströmungsmodell festzustellen, wobei das theoretische Nachlaufströmungsmodell ein Frandsen-Modell oder ein Larsen-Modell; und
optimieren des Betriebs der ersten und der zweiten Windturbine beruhend auf dem aktuellen Nachlaufströmungsmodell.

2. Ein Verfahren zum Betrieb von einer ersten und einer zweiten Windturbine nach Anspruch 1, wobei das Feststellen des einen oder der mehreren Windparameter an der ersten Windturbine das Feststellen einer ersten Windgeschwindigkeit an der ersten Windturbine umfasst; wobei
das Feststellen des einen oder der mehreren Windparameter an der zweiten Windturbine das Feststellen einer zweiten Windgeschwindigkeit an der zweiten Windturbine umfasst; und wobei
der Wert des Parameters des theoretischen Nachlaufströmungsmodells in Abhängigkeit von den ersten und zweiten Windgeschwindigkeiten festgestellt wird, welche auf einen durch die Nachlaufströmung an der zweiten Windturbine verursachten Windgeschwindigkeitsmangel hindeuten.

3. Ein Verfahren zum Betrieb von einer ersten und einer zweiten Windturbine nach Anspruch 1, wobei das Modell ein Frandsen-Modell und wobei
das Feststellen des einen oder der mehreren Windparameter an der ersten Windturbine das Feststellen von einer ersten Windturbulenz an der ersten Windturbine umfasst; wobei
das Feststellen des einen oder der mehreren Windparameter an der zweiten Windturbine das Feststellen einer zweiten Windturbulenz an der zweiten Windturbine umfasst; und wobei
der Wert des Parameters des theoretischen Nachlaufströmungsmodells in Abhängigkeit von den ersten und zweiten Windturbulenzen festgestellt wird, welche auf einen durch die Nachlaufströmung an der zweiten Windturbine verursachte zusätzliche Windturbulenz hindeuten.

4. Ein Verfahren zum Betrieb von einer ersten Windturbine und einer zweiten Windturbine in einer Situation, bei der die Anwesenheit der ersten Windturbine auf den Wind derart wirkt, dass eine Nachlaufströmung erzeugt wird, welche auf die zweite Windturbine wirkt, wobei das Verfahren folgendes umfasst:
feststellen von einem oder mehreren Windparametern an der ersten Windturbine;
feststellen von einem oder mehreren Windparametern an der zweiten Windturbine;
beruhend auf dem einen oder mehreren Windparametern an der ersten Windturbine, und auf dem einen oder mehreren Windparametern an der zweiten Windturbine, feststellen von einem Wert eines Parameters eines theoretischen Nachlaufströmungsmodells, um ein aktuelles Nachlaufströmungsmodell festzustellen; und
optimieren des Betriebs der ersten und der zweiten Windturbine beruhend auf dem aktuellen Nachlaufströmungsmodell,
wobei der eine oder die mehreren Windparameter an der ersten Windturbine beruhend auf einem oder mehreren Messungen durch ein mit der ersten Windturbine verknüpften LIDAR festgestellt werden, und/oder der eine oder die mehreren Windparameter an der zweiten Windturbine beruhend auf einem oder mehreren Messungen durch ein mit der zweiten Windturbine verknüpften LIDAR festgestellt werden.

5. Ein Verfahren zum Betrieb von einer ersten und einer zweiten Windturbine nach einem der Ansprüche 1 bis 4, wobei der eine oder die mehreren Windparameter an der ersten Windturbine beruhend auf einer oder mehreren Betriebseigenschaften der ersten Windturbine festgestellt werden, und/oder der eine oder die mehreren Windparameter an der zweiten Windturbine beruhend auf einer oder mehreren Betriebseigenschaften der zweiten Windturbine festgestellt werden; wobei
die eine oder die mehreren Betriebseigenschaften mindestens eine der folgenden umfasst: Nickwinkel, Gierwinkel, Rotordrehzahl, Rotordrehmoment und erzeugte Leistung.

6. Ein Verfahren zum Betrieb von einer ersten Windturbine und einer zweiten Windturbine in einer Situation, bei der die Anwesenheit der ersten Windturbine auf den Wind derart wirkt, dass eine Nachlaufströmung erzeugt wird, welche auf die zweite Windturbine wirkt, wobei das Verfahren folgendes umfasst:
feststellen von einem oder mehreren Windparametern an der ersten Windturbine;
feststellen von einem oder mehreren Windparametern an der zweiten Windturbine;
beruhend auf dem einen oder mehreren Windparametern an der ersten Windturbine, und auf dem einen oder mehreren Windparametern an der zweiten Windturbine, feststellen von einem Wert eines Parameters eines theoretischen Nachlaufströmungsmodells, um ein aktuelles Nachlaufströmungsmodell festzustellen; und
optimieren des Betriebs der ersten und der zweiten Windturbine beruhend auf dem aktuellen Nachlaufströmungsmodell, wobei
der eine oder die mehreren Windparameter an der ersten Windturbine beruhend auf einer oder mehreren an der ersten Windturbine gemessenen Belastungen festgestellt werden, und/oder der eine oder die mehreren Windparameter an der zweiten Windturbine beruhend auf einer oder mehreren an der zweiten Windturbine gemessenen Belastungen festgestellt werden, und wobei
das Feststellen des einen oder der mehreren Windparameter an der ersten Windturbine das Feststellen einer ersten Windgeschwindigkeit an der ersten Windturbine umfass und das Feststellen des einen oder der mehreren Windparameter an der zweiten Windturbine das Feststellen einer zweiten Windgeschwindigkeit an der zweiten Windturbine umfasst und der Wert des Parameters des theoretischen Nachlaufströmungsmodells in Abhängigkeit von den ersten und zweiten Windgeschwindigkeiten festgestellt wird, welche auf einen durch die Nachlaufströmung an der zweiten Windturbine verursachten Windgeschwindigkeitsmangel hindeuten, oder wobei
das Feststellen des einen oder der mehreren Windparameter an der ersten Windturbine das Feststellen von einer ersten Windturbulenz an der ersten Windturbine umfasst und das Feststellen des einen oder der mehreren Windparameter an der zweiten Windturbine das Feststellen einer zweiten Windturbulenz an der zweiten Windturbine umfasst und wobei der Wert des Parameters des theoretischen Nachlaufströmungsmodells in Abhängigkeit von den ersten und zweiten Windturbulenzen festgestellt wird, welche auf einen durch die Nachlaufströmung an der zweiten Windturbine verursachte zusätzliche Windturbulenz hindeuten.

7. Ein Verfahren zum Betrieb von einer ersten und einer zweiten Windturbine nach einem der Ansprüche 1 bis 6, weiterhin umfassend:
feststellen einer Divergenz zwischen einem vorher festgestellten Nachlaufströmungsmodell und dem aktuellen Nachlaufströmungsmodell;
prüfen, ob die Divergenz einen vordefinierten Schwellenwert überschreitet; und
falls das Ergebnis der Prüfung negativ ist, das Annehmen des vorher festgestellten Nachlaufströmungsmodells als das aktuelle Nachlaufströmungsmodell.

8. Ein Verfahren zum Betrieb von einer ersten und einer zweiten Windturbine nach einem der Ansprüche 1 bis 7, wobei das vorher festgestellte Nachlaufströmungsmodell ein in einer vorherigen Durchführung des Verfahrens zum Betrieb der ersten und zweiten Windturbinen festgestelltes Nachlaufströmungsmodell ist.

9. Ein Verfahren zum Betrieb von einer ersten und einer zweiten Windturbine nach einem der Ansprüche 1 bis 8, wobei die erste und die zweite Windturbine in dem betätigt werden, dass einer oder mehrere Betriebsparameter der Windturbine kontrolliert wird bzw. werden; und wobei die Optimierung des Betriebs der ersten und zweiten Windturbinen folgendes umfasst
erhalten von Optimalwerten der Betriebsparameter aus einer oder mehreren Matrizen oder Umsetzungstabellen, welche mögliche Werte der Betriebsparameter in Abhängigkeit von mindestens möglichen Werten von einem oder mehreren Parametern eines Optimierungsziels und möglichen Werten von einem oder mehreren Parametern des aktuellen Nachlaufströmungsmodells definieren; wobei
die Optimalwerte der Betriebsparameter solche sind, welche die Parameter des Optimierungsziels in Abhängigkeit von den Parametern des aktuellen Nachlaufströmungsmodells maximieren.

10. Ein Verfahren zum Betrieb einer ersten und einer zweiten Windturbine nach einem der Ansprüche 1 bis 8, wobei die erste und die zweite Windturbine in dem betätigt werden, dass einer oder mehrere Betriebsparameter der Windturbine kontrolliert wird bzw. werden; und wobei die Optimierung des Betriebs der ersten und zweiten Windturbinen folgendes umfasst
erhalten von Optimalwerten der Betriebsparameter aus einer oder mehreren Funktionen, welche die Betriebsparameter in Abhängigkeit von mindestens einem oder mehreren Parametern eines Optimierungsziels und einem oder mehreren Parametern des aktuellen Nachlaufströmungsmodells definieren; wobei
die Optimalwerte der Betriebsparameter solche sind, welche die Parameter des Optimierungsziels in Abhängigkeit von den Parametern des aktuellen Nachlaufströmungsmodells maximieren.

11. Ein Verfahren zum Betrieb von einer Vielzahl von Windturbinen, wobei das Verfahren das Ermitteln von einem oder mehreren Paaren der Windturbinen umfasst, welche eine erste Windturbine und eine zweite Windturbine in einer Situation haben, bei der die Anwesenheit der ersten Windturbine auf den Wind derart wirkt, dass eine Nachlaufströmung erzeugt wird, welche auf die zweite Windturbine wirkt; betreiben, für mindestens manche ermittelte Paare von Windturbinen, der ersten und zweiten Windturbinen des Paars von Windturbinen, in dem ein Verfahren zum Betrieb von ersten und zweiten Windturbinen nach einem der Ansprüche 1 bis 10 durchgeführt wird.

12. Ein Verfahren zum Betrieb von einer Vielzahl von Windturbinen nach Anspruch 11, wobei mindestens eines der Paare von Windturbinen mittels eines vorher festgestellten Nachlaufströmungsmodells ermittelt wird.

13. Ein Regelsystem zum Betrieb von einer Vielzahl von Windturbinen, umfassend einen Prozessor und einen Speicher; wobei der Speicher von einem Computer ausführbare Anweisungen speichert, welche, wenn sie ausgeführt werden, das Durchführen von einem Verfahren zum Betrieb von einer Vielzahl von Windturbinen nach einem der Ansprüche 11 bis 12 durch den Prozessor veranlasst.

14. Ein Windturbinenpark umfassend eine Vielzahl von Windturbinen und ein Regelsystem nach Anspruch 13.

## Revendications

1. Un procédé de fonctionnement d'une première éolienne et d'une deuxième éolienne dans une situation dans laquelle la présence de la première éolienne agit sur le vent de manière qu'un sillage est généré qui agit sur la deuxième éolienne, le procédé comprenant :
déterminer un ou plusieurs paramètres du vent à la première éolienne ;
déterminer un ou plusieurs paramètres du vent à la deuxième éolienne ;
à partir de l'un ou des plusieurs paramètres du vent à la première éolienne, et de l'un ou des plusieurs paramètres du vent à la deuxième éolienne, déterminer une valeur d'un paramètre d'un modèle de sillage théorique afin de déterminer un modèle de sillage actuel, dans lequel le modèle de sillage théorique est un modèle de Larsen ou un modèle de Frandsen ; et
optimiser le fonctionnement des éoliennes première et deuxième sur la base du modèle de sillage actuel.

2. Un procédé de fonctionnement d'une première et d'une deuxième éolienne selon la revendication 1, dans lequel déterminer l'un ou les plusieurs paramètres du vent à la première éolienne comprend déterminer une première vitesse du vent à la première éolienne; dans lequel
déterminer l'un ou les plusieurs paramètres du vent à la deuxième éolienne comprend déterminer une deuxième vitesse du vent à la deuxième éolienne ; et dans lequel
la valeur du paramètre du modèle de sillage théorique est déterminée en fonction des vitesses du vent première et deuxième indiquant un déficit de vitesse du vent dû au sillage sur la deuxième éolienne.

3. Un procédé de fonctionnement d'une première et d'une deuxième éolienne selon l'une quelconque des revendications 1 ou 2, dans lequel déterminer l'un ou les plusieurs paramètres du vent à la première éolienne comprend déterminer une première turbulence du vent à la première éolienne ; dans lequel
déterminer l'un ou les plusieurs paramètres du vent à la deuxième éolienne comprend déterminer une deuxième turbulence du vent à la deuxième éolienne ; et dans lequel
la valeur du paramètre du modèle de sillage théorique est déterminée en fonction des turbulences du vent première et deuxième indiquant une turbulence du vent accrue due au sillage sur la deuxième éolienne.

4. Un procédé de fonctionnement d'une première éolienne et d'une deuxième éolienne dans une situation dans laquelle la présence de la première éolienne agit sur le vent de manière qu'un sillage est généré qui agit sur la deuxième éolienne, le procédé comprenant :
déterminer un ou plusieurs paramètres du vent à la première éolienne ;
déterminer un ou plusieurs paramètres du vent à la deuxième éolienne ;
à partir de l'un ou des plusieurs paramètres du vent à la première éolienne, et de l'un ou des plusieurs paramètres du vent à la deuxième éolienne, déterminer une valeur d'un paramètre d'un modèle de sillage théorique afin de déterminer un modèle de sillage actuel ; et
optimiser le fonctionnement des éoliennes première et deuxième sur la base du modèle de sillage actuel,
dans lequel l'un ou les plusieurs paramètres du vent à la première éolienne sont déterminés à partir d'un ou de plusieurs mesures réalisées par un LIDAR lié à la première éolienne, et/ou l'un ou les plusieurs paramètres du vent à la deuxième éolienne sont déterminés à partir d'un ou de plusieurs mesures réalisées par un LIDAR lié à la deuxième éolienne.

5. Un procédé de fonctionnement d'une première et d'une deuxième éolienne selon l'une quelconque des revendications 1 à 4, dans lequel l'un ou les plusieurs paramètres du vent à la première éolienne sont déterminés à partir d'une ou de plusieurs caractéristiques de fonctionnement de la première éolienne, et/ou le ou les plusieurs paramètres du vent à la deuxième éolienne sont déterminés à partir d'une ou de plusieurs caractéristiques de fonctionnement de la deuxième éolienne ; dans lequel
ladite une ou lesdites plusieurs caractéristiques de fonctionnement comprennent au moins un parmi : angle de tangage, angle de lacet, vitesse du rotor, moment du rotor et puissance générée.

6. Un procédé de fonctionnement d'une première éolienne et d'une deuxième éolienne dans une situation dans laquelle la présence de la première éolienne agit sur le vent de manière qu'un sillage est généré qui agit sur la deuxième éolienne, le procédé comprenant :
déterminer un ou plusieurs paramètres du vent à la première éolienne ;
déterminer un ou plusieurs paramètres du vent à la deuxième éolienne ;
à partir de l'un ou des plusieurs paramètres du vent à la première éolienne, et de l'un ou des plusieurs paramètres du vent à la deuxième éolienne, déterminer une valeur d'un paramètre d'un modèle de sillage théorique afin de déterminer un modèle de sillage actuel ; et
optimiser le fonctionnement des éoliennes première et deuxième sur la base du modèle de sillage actuel,
dans lequel l'un ou les plusieurs paramètres du vent à la première éolienne sont déterminés à partir d'une ou de plusieurs charges mesurées à la première éolienne, et/ou l'un ou les plusieurs paramètres du vent à la deuxième éolienne sont déterminés à partir d'une ou de plusieurs charges mesurées à la deuxième éolienne,
dans lequel déterminer l'un ou les plusieurs paramètres du vent à la première éolienne comprend déterminer une première vitesse du vent à la première éolienne; dans lequel y déterminer l'un ou les plusieurs paramètres du vent à la deuxième éolienne comprend déterminer une deuxième vitesse du vent à la deuxième éolienne ; et dans lequel la valeur du paramètre du modèle de sillage théorique est déterminée en fonction des vitesses du vent première et deuxième indiquant un déficit de vitesse du vent dû au sillage sur la deuxième éolienne, ou bien
dans lequel déterminer l'un ou les plusieurs paramètres du vent à la première éolienne comprend déterminer une première turbulence du vent à la première éolienne ; et déterminer l'un ou les plusieurs paramètres du vent à la deuxième éolienne comprend déterminer une deuxième turbulence du vent à la deuxième éolienne ; et dans lequel la valeur du paramètre du modèle de sillage théorique est déterminée en fonction des turbulences du vent première et deuxième indiquant une turbulence du vent accrue due au sillage sur la deuxième éolienne.

7. Un procédé de fonctionnement d'une première et d'une deuxième éolienne selon l'une quelconque des revendications 1 à 6, comprenant en outre :
déterminer une divergence entre un modèle de sillage déterminé au préalable et le modèle de sillage actuel ;
vérifier si ladite divergence dépasse une valeur de seuil prédéfinie ; et
en cas d'un résultat négatif de ladite vérification, prendre le modèle de sillage déterminé au préalable comme le modèle de sillage actuel.

8. Un procédé de fonctionnement d'une première et d'une deuxième éolienne selon l'une quelconque des revendications 1 à 7, dans lequel le modèle de sillage déterminé au préalable est un modèle de sillage déterminé lors d'une exécution précédente du procédé de fonctionnement des éoliennes première et deuxième.

9. Un procédé de fonctionnement d'une première et d'une deuxième éolienne selon l'une quelconque des revendications 1 à 8, dans lequel les éoliennes première et deuxième sont actionnées en contrôlant un ou plusieurs paramètres de fonctionnement de l'éolienne ; et dans lequel l'optimisation du fonctionnement des éoliennes première et deuxième comprend
obtenir des valeurs optimales des paramètres de fonctionnement à partir d'une ou de plusieurs matrices ou tables de consultation qui définissent des possibles valeurs des paramètres de fonctionnement en fonction d'au moins des possibles valeurs d'un ou de plusieurs paramètres d'un objectif d'optimisation et des possibles valeurs d'un ou de plusieurs paramètres du modèle de sillage actuel ; dans lequel
lesdites valeurs optimales des paramètres de fonctionnement sont celles qui maximisent les paramètres de l'objectif d'optimisation en fonction des paramètres du modèle de sillage actuel.

10. Un procédé de fonctionnement d'une première et d'une deuxième éolienne selon l'une quelconque des revendications 1 à 8, dans lequel les éoliennes première et deuxième sont actionnées en contrôlant un ou plusieurs paramètres de fonctionnement de l'éolienne ; et dans lequel l'optimisation du fonctionnement des éoliennes première et deuxième comprend
obtenir des valeurs optimales des paramètres de fonctionnement à partir d'une ou de plusieurs fonctions qui définissent les paramètres de fonctionnement en fonction d'au moins un ou plusieurs paramètres d'un objectif d'optimisation et d'un ou plusieurs paramètres du modèle de sillage actuel ; dans lequel
lesdites valeurs optimales des paramètres de fonctionnement sont celles qui maximisent les paramètres de l'objectif d'optimisation en fonction des paramètres du modèle de sillage actuel.

11. Un procédé de fonctionnement d'une pluralité d'éoliennes, le procédé comprenant
détecter une ou plusieurs paires des éoliennes ayant une première éolienne et une deuxième éolienne dans une situation dans laquelle la présence de la première éolienne agit sur le vent de manière qu'un sillage est généré qui agit sur la deuxième éolienne :
faire fonctionner, pour au moins quelques-unes des paires d'éoliennes détectées, les éoliennes première et deuxième de la paire d'éoliennes en mettant en oeuvre un procédé de fonctionnement d'éoliennes premières et deuxièmes selon l'une quelconque des revendications 1 à 10.

12. Un procédé de fonctionnement d'une pluralité d'éoliennes selon la revendication 11, dans lequel au moins une des paires d'éoliennes est détectée en utilisant un modèle de sillage déterminé au préalable.

13. Un système de réglage pour faire fonctionner une pluralité d'éoliennes, comprenant un processeur et une mémoire ; dans lequel la mémoire stocke des instructions exécutables par ordinateur qui, lorsqu'elles sont exécutées, entraînent la mise en oeuvre d'un procédé de fonctionnement d'une pluralité d'éoliennes selon l'une quelconque des revendications 11 à 12 par le processeur.

14. Un parc éolien comprenant une pluralité d'éoliennes et un système de réglage selon la revendication 13.
